Europäisches Patentamt

European Patent Office

Office européen des brevets

(19)

(11) Veröffentlichungsnummer: **0 169 368**
**B1**

(12) **EUROPÄISCHE PATENTSCHRIFT**

(45) Veröffentlichungstag der Patentschrift: **19.09.90**

(21) Anmeldenummer: **85107483.1**

(22) Anmeldetag: **18.06.85**

(51) Int. Cl.⁵: **G 01 B 7/28**

(54) Vorrichtung zur Ermittlung der Kreisformabweichungen von rotationssymmetrischen Teilen.

(30) Priorität: **26.06.84 DE 3423547**

(43) Veröffentlichungstag der Anmeldung:
**29.01.86 Patentblatt 86/05**

(45) Bekanntmachung des Hinweises auf die
Patenterteilung:
**19.09.90 Patentblatt 90/38**

(84) Benannte Vertragsstaaten:
**AT BE CH DE FR GB IT LI NL SE**

(56) Entgegenhaltungen:
**EP-A-0 068 082**
**DE-A-2 416 120**
**DE-A-2 459 678**
**DE-A-2 654 025**
**FR-A-2 251 802**
**GB-A-1 382 060**

(73) Patentinhaber: **Siemens Aktiengesellschaft**
**Wittelsbacherplatz 2**
**D-8000 München 2 (DE)**

(72) Erfinder: **Niedermayr, Erich, Dipl.-Ing.**
**Keuslinstr. 6 bei Hr. Dr. Lechner**
**D-8000 München 40 (DE)**

**Beschreibung**

Die Erfindung betrifft eine Vorrichtung zur Ermittlung der Kreisformabweichungen von rotationssymmetrischen Teilen, insbesonder von Stahlrohren, nach dem Oberbegriff des Anspruchs 1.

Beim Verlegen von Stahlrohrleitungen für Erdgas und dgl. werden die einzelnen Rohrstücke unmittelbar an Ort und Stelle aneinandergeschweißt. Um die Schweißnähte richtig ziehen zu können, dürfen die Endbereiche der Rohrstücke keine unzulässig großen Kreisformabweichungen wie Unrundheiten, Ausbeulungen, Einbeulungen oder Schweißnahtbuckel aufweisen. Da derartige unzulässige Kreisformabweichungen häufig erst beim Ziehen der Schweißnaht erkannt werden, können sie auf der Baustelle zu erheblichen Schwierigkeiten führen. Um diese auf der Baustelle nur schwer behebbaren Schwierigkeiten zu vermeiden, müßten die Endbereiche der miteinander zu verschweißenden Rohrstücke bereits vorher einer Rundheitsprüfung unterzogen werden, so daß Rohrstücke mit unzulässigen Kreisformabweichungen nachgearbeitet oder ausgesondert werden können.

Es ist bekannt, zur Rundheitsprüfung bzw. zur Ermittlung der Kreisformabweichungen rotationssymmetrischer Teile sog. Spindelmeßgeräte zu verwenden, bei welchen die Spindel zunächst fluchtend auf die Prüflingsachse eingestellt werden muß. Die Antastung erfolgt radial, wobei entweder Prüfling mit Tisch oder Taster gedreht werden. Die Auslenkung des Meßfühlers wird dann pneumatisch oder elektrisch verstärkt und mit einem Polarschreiber aufgezeichnet. Aus dem Polardiagramm wird dann die Abweichung von Kreis als Durchmesserunterschied zweier konzentrischer Kreise, zwischen denen die Umfangslinie liegt, ermittelt (Lueger Lexikon der Technik, Band 9, Deutsche Verlags-Anstalt, Stuttgart, 1968, S. 213).

Bei den bekannten Spindelmeßgeräten für die Rundheitsprüfung sollte die Spindel möglichst genau fluchtend auf die Prüflingsachse eingestellt werden, da sich eine exzentrische Einstellung der Spindel als Fehler der ermittelten Kreisformabweichungen auswirkt. Insbesondere bei hohlzylindrischen Teilen wie Stahlrohren und dgl. kann die Spindel aber nur annähernd fluchtend auf die Prüflingsachse eingestellt werden, wobei eine mit vertretbaren Aufwand durchführbare Spindeleinstellung nur ungenaue Messungen der Kreisformabweichungen zuläßt.

Aus der europäischen Patentanmeldung 0 068 082 ist ein Verfahren zur Messung der Rundheitsabweichungen von Rotationskörpern und Einrichtungen zur Durchführung des Verfahrens bekannt. Hierbei wird in einem ortsfesten Rahmen ein Rundtisch mit einer Spindel in einem Präzisionslager drehbar gelagert, wobei mittels eines Abtastkokpfes ein mit dem Rundtisch rotierender Prüfling vermessen wird. Eine exakte Zentrierung der Körperachse des Prüflinges auf die Achse der Spindel ist hierbei nicht notwendig. Mittels eines Digitalrechners werden die vom Abtastkopf aufgenommenen Meßwerte in ein Kreisformabweichungssignal und ein Exzentrizitätssignal aufgeteilt.

In der DE—OS—2 416 120 wird ein Verfahren zum Ausmessen von geometrischen Parametern mechanischer Werkstücke beschrieben. Hierbei werden Werkstücke mit rotationssymmetrischen und koaxial zueinander angeordneten Oberflächen behandelt. Geprüft wird die Konzentrizität und die Rundheit an den Werkstücken.

Der Erfindung liegt die Aufgabe zugrunde, eine Vorrichtung zur Ermittlung von Kreisformabweichungen von rotationssymmetrischen Teilen zu schaffen, welche bei einfachem und robustem Aufbau eine rasche und genaue Rundheitsprüfung von Stahlrohren und ähnlichen Teilen ermöglicht.

Diese Aufgabe wird durch die Merkmale des Anspruchs 1 gelöst.

Der Erfindung liegt die Erkenntnis zugrunde, daß bei einer Vorrichtung mit einer nur annähernd fluchtenden Einstellung einer Spindel, bezogen auf einen Prüfling und mit einer elektronischen Signalverarbeitungseinrichtung, die Trennung der Signalanteile des Sensorsignales in ein Kreisformabweichungssignal und ein Exzentrizitätssignal durch Addition des Sensorsignales mit einem zweiten Signal gleichen Signalverlaufes, aber einer Phasenverschiebung von 180°, geschehen kann.

Durch die Addition und durch die Phasenverschiebung der beiden Signale kann die durch eine exzentrische Spindeleinstellung bedingte Cosinusschwingung besonders einfach eliminiert werden. Diese Eliminierung der Cosinusschwingung entspricht dann auch praktisch einer Eliminierung des auf einer exzentrischen Einstellung der Spindel beruhenden Signalanteils des Sensorsignals.

Gemäß einer weiteren Ausgestaltung der Erfindung ist vorgesehen, daß in der Signalverarbeitungseinrichtung von dem aus Sensorsignal und zweitem Signal gebildeten Summensignal ein Geichanteil abziehbar ist, wobei der Gleichanteil dem Durchmesser eines dem Prüfling zugeordneten Normkreises entspricht. Als Normkreis kann dann der Außenumfang oder der Innenumfang des Prüflings herangezogen werden, so daß eventuelle Kreisformabweichungen unmittelbar nach Betrag und Richtung als Abweichungen vom normierten Außendurchmesser bzw. Innendurchmesser des Prüflings angegeben werden können.

Der auf zu detektierenden Kreisformabweichungen beruhende Signalanteil des Sensorsignals kann auch auf Überschreiten bzw. Unterschreiten vorgebbarer Toleranzschwellen überwacht werden, wodurch beispielsweise Rohrstücke mit für Schweißverbindungen unzulässig großen Kreisformabweichungen auf besonders einfache Weise ausgesondert werden können.

Gemäß einer weiteren bevorzugten Ausgestaltung der Erfindung ist der Spindel ein Winkelschrittgeber zugeordnet. Mit Hilfe dieses Winkelschrittgebers kann dann über den zugeordneten Drehwinkel der Spindel die räumliche Lage einer festgestellten Kreisformabweichung angegeben und ggf. markiert werden.

EP 0 169 368 B1

Ein besonders einfacher Aufbau der Signalverarbeitungseinrichtung ergibt sich dadurch, daß das zweite Signal durch einen zweiten um die Spindelachse drehbaren Abstandssensor erzeugbar ist, wobei der Abstandssensor und der zweite Abstandssensor bezüglich der Spindelachse einander diametral gegenüberliegend angeordnet sind. Die Bildung des zweiten Signals mit dem um 180° phasenverschobenen Signalverlauf erfolgt also außerhalb der Signalverarbeitungseinrichtung durch den zweiten Abstandssensor. Zweckmäßigerweise sind dann das Summensignal und das zweite Signal einem Addierglied der Signalverarbeitungseinrichtung zuführbar. Die Abtrennung des Gleichanteils erfolgt dann einfach dadurch, daß das in dem Addierglied gebildete Summensignal und ein der negativen Gleichanteil entsprechendes Signal einem zweiten Addierglied zuführbar sind. Das in dem zweiten Addierglied gebildete Differenzsignal kann dann einem Schwellwertkomparator zugeführt werden, welcher anhand vorgebbarer Toleranzschwellen eine rasche Gut/Schlecht-Aussage ermöglicht.

Gemäß einer anderen bevorzugten Ausführungsform der Signalverarbeitungseinrichung ist das Sensorsignal einem Speicher der Signalverarbeitungseinrichtung zuführbar, dessen Speicherplätze einer 360°-Teilung des Drehwinkels der Spindel zugeordnet sind. Das Sensorsignal und das um einen Drehwinkel von 180° phasenverschobene zweite Signal können dann in entsprechender Weise aus diesem Speicher ausgelesen werden. Vorzugsweise ist das Summensignal über einen Analog-Digital-Umsetzer dem Speicher zuführbar. In diesem Falle können dann die digitalisierten Sensorsignalwerte von jeweils zwei, 180° versetzten Drehwinkeln zugeordneten Speicherplätzen des Speichers mit Hilfe eines Mikroprozessors addiert werden. Zweckmäßigerweise wird dann auch das Überschreiten oder Unterschreiten vorgebbarer Toleranzschwellen durch den Mikroprocessor überwacht.

Gemäß einer weiteren bevorzugten Ausgestaltung der Erfindung ist die Signalverarbeitungseinrichtung mit der Spindel drehbar angeordnet. Für die Übertragung des Sensorsignals und ggf. des zweiten Signals sind dann keine Schleifringe oder ähnliche Übertragungseinrichtungen erforderlich. Ist dann zusätzlich noch für die Spannungsversorgung der Signalverarbeitungseinrichtung eine mit der Spindel drehbar Batterie vorgesehen, so ergibt sich ein besonders einfacher Aufbau, der insbesondere für tragbare Vorrichtungen zur Ermittlung von Kreisformabweichungen geeignet ist.

Für einen einfachen Aufbau und eine einfache Anwendung der Vorrichtung ist es weiterhin zweckmäßig, wenn die Spindel in einer auf den Prüfling aufschiebbaren Halterung gelagert ist. Derartige Halterungen sind insbesondere für die Rundheitsprüfung von Stahlrohren geeignet.

Ausführungsbeispiele der Erfindung sind in der Zeichnung dargestellt und werden im folgenden näher beschrieben. Es zeigen:

Figuren 1 und 2 die Ableitung des der Erfindung zugrundeliegenden Prinzips,

Figuren 3 und 4 eine Vorrichtung zur Ermittlung der Kreisformabweichungen von Stahlrohren in der stirnseitigen Draufsicht bzw. im Schnitt,

Figur 5 ein erstes Ausführungsbeispiel einer Signalverarbeitungseinrichtung und

Figur 6 ein zweites Ausführungsbeispiel einer Signalverarbeitungseinrichtung.

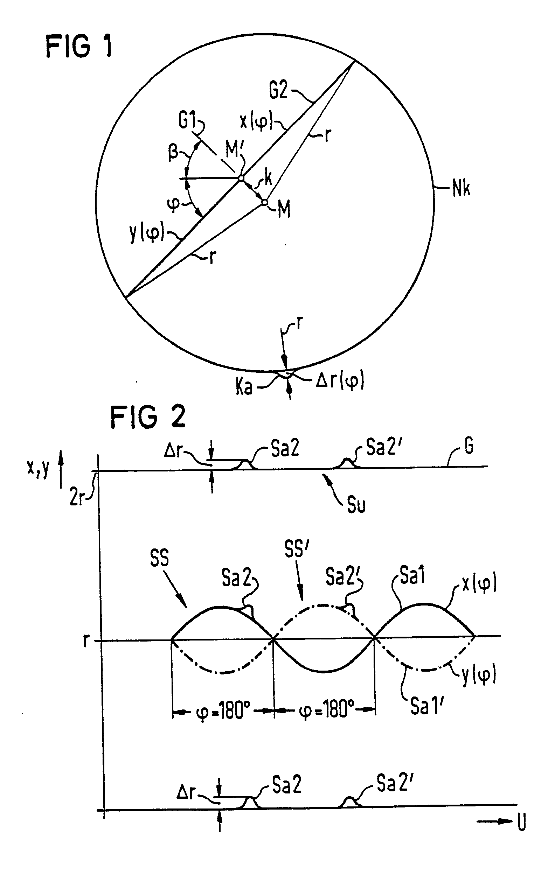

Figur 1 zeigt einen Normkreis Nk mit dem Radius r und dem Mittelpunkt M. Als Abweichung von der idealen Kreisform des Normkreises Nk ist an einer Stelle des Kreisumfangs eine Kreisformabweichung Ka in Form einer Ausbeulung angedeutet. Ferner ist in Figur 1 ein zweiter Punkt M′ zu erkennen, welcher zum Mittelpunkt M den Abstand k aufweist, wobei die Richtung dieser Exzentrizität k durch den winkel β zwischen einer Horizontalen und einer durch den Mittelpunkt M und den Punkt M′ gehenden Geraden G1 aufgezeigt ist. Legt man nun durch den Punkt M′ eine Gerade G2 und dreht diese Gerade G2 mit dem Drehwinkel φ um den Punkt M′, so ergeben sich auf der Geraden G2 von der Exzentrizität k und vom Drehwinkel abhängige Abstände x(φ) und y(φ) zwischen dem Punkt M′ und dem Umfang des Normkreises Nk. Mit Hilfe elementarer Winkelbeziehungen und dem Cosinussatz findet man fur x(φ) und y(φ) folgende Beziehungen:

$$x(\varphi) = k \cdot \cos(\varphi + \beta) + \sqrt{r^2 - k^2 \sin^2(\varphi + \beta)}$$

$$y(\varphi) = k \cdot \cos(\varphi + 180° + \beta) + \sqrt{r^2 - k^2 \sin^2(\varphi + 180° + \beta)}$$

$$= -k \cdot \cos(\varphi + \beta) + \sqrt{r^2 - k^2 \sin^2(\varphi + \beta)}$$

Diese Abstände x(φ) und y(φ) sind in Figur 2 in Abhängigkeit von den Umdrehungen U der Geraden G2 aufgezeigt. Wie zu erkennen ist, handelt es sich um zwei Schwingungen, die um den Radius r des Normkreises NK schwingen und um einen Drehwinkel von φ = 180° phasenverschoben sind. Dabei handelt es sich bei beiden Schwingungen im wesentlichen um Cosinusschwingungen. Durch Addition der Abstände x(φ) und y(φ) kann nun diese durch die Exzentrizität k des Punktes M′ bedingte Cosinusschwingung eliminiert werden. Die verbleibenden Terme sind damit

$$x(\varphi) + y(\varphi) = 2\sqrt{r^2 - k^2 \sin^2(\varphi + \beta)}$$

Geht man nun davon aus, daß es sich bei dem Normkreis Nk um den normierten Innendurchmesser eines Stahlrohres handelt und daß es sich bei dem Punkt M′ um den Drehpunkt der Spindel einer Vorrichtung zur

3

Ermittlung von Kreisformabweichungen hendelt, so kann beispielsweise bei Rohrdurchmessern von ca. 150 bis 500 mm eine maximale Exzentrizität von ± 3 mm ohne Schwierigkeiten gewährleistet werden. Damit ergibt sich ein Fehler

$$x(\varphi) + y(\varphi) = 2r \sqrt{1 - (k/r)^2 \sin^2(\varphi + \beta)}$$

Mit $k/r \leq 2\%$ ergibt sich ein maximaler Fehler bei $\varphi + \beta = 90°C$ von:

$$x(\varphi) + y(\varphi) = 2r \sqrt{1 - (0,002)^2}$$
$$= 0,9997 \cdot 2r$$

Somit ist der Einfluß des quadratischen Sinusanteils in der Wurzel für die angestrebte Meßgenauigkeit zu vernachlässigen und es gilt

$$x(\varphi) + y(\varphi) = 2r$$

Wird der Abstand $x(\varphi)$ mit Hilfe eines um den Punkt M' drehbaren Abstandssensors gemessen, so ergibt sich das in Figur 2 dargestellte Sensorsignal SS. Dieses Sensorsignal SS besitzt einen auf der Exzentrizität k des Punktes M' beruhenden Signalanteil Sa1 und einen auf zu detektierenden Kreisformabweichungen Ka (vgl. Figur 1) beruhenden Signalanteil Sa2. Ein dem Abstand $y(\varphi)$ entsprechendes zweites Signal SS' kann entweder durch eine Phasenverschiebung des Sensorsignals SS um einen Drehwinkel von $\varphi = 180°$ der durch einen zweiten Abstandssensor erzeugt werden. Dementsprechend besitzt das zweite Signal SS' einen auf der Exzentrizität k beruhenden Signalanteil Sa1' und einen auf zu detektierenden Kreisformabweichungen beruhenden Signalanteil Sa2'.

Die Beziehung

$$x(\varphi) + y(\varphi) \cong 2r$$

gilt für den idialen Normkreis Nk. Treten Kreisformabweichungen Ka auf, so gilt:

$$x(\varphi) + y(\varphi) = 2r \pm \Delta r(\varphi),$$

wobei es sich bei $\pm \Delta r(\varphi)$ um den in radialer Richtung gemessenen Betrag einer Kreisformabweichung Ka beim Drehwinkel $\varphi$ handelt. Gemäß Figur 2 ergibt sich durch eine Addition des Sensorsignals SS und des zweiten Signals SS' ein Summensignal Su mit einem Gleichanteil G und den auf zu detektierenden Kreisformabweichungen Ka beruhenden Signalanteilen Sa2 und Sa2'. Zieht man von dem Summensignal Su den dem doppelten Radius r des Normkreises Nk entsprechenden Gleichanteil G ab, so verbleiben lediglich die Signalanteile Sa2 und Sa2', die dem Wert $\pm \Delta t(\varphi)$ entsprechen und somit Drehwinkeln $\varphi$ zugeordnete Kreisformabweichungen Ka nach Betrag und Richtung angeben. Kreisformabweichungen Ka, die exakt diametral gegenüber und gegengleich als Ausbeulung und Einbeulung auftreten, können somit nicht erkannt werden. Das Auftreten derartiger Fehler kann aber als äußerst unwahrscheinlich angesehen werden. Außeredem kann dieser Fall auch dadurch vermieden werden, daß man den Signalanteil Sa1 des Sensorsignals SS nicht durch die Addition eines um einen Drehwinkel von 180° phasenverschobenen zweiten Signals, sondern mittels geeigneter Schaltungen bzw. Algorithmen zur Eliminierung der Cosinusschwingung abtrennt.

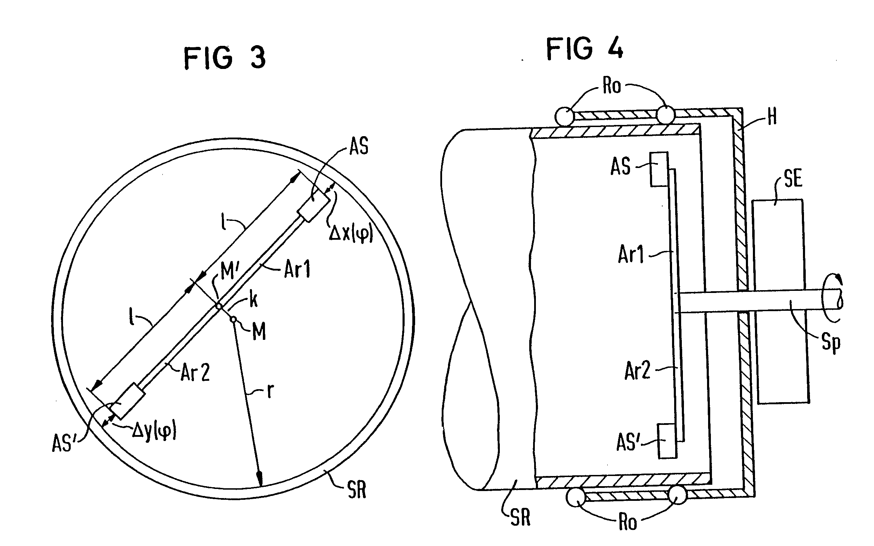

Die Figuren 3 und 4 zeigen eine Vorrichung zur Ermittlung der Kreisformabweichungen von Stahlrohren in stark vereinfachter schematischer Darstellung. Dabei sind entsprechend den in Figur 1 gewählten Bezeichnungen in Figur 3 mit M der ideale Mittelpunkt eines Stahlrohres SR, mit M' der Drehpunkt einer in Figur 4 erkennbaren Spindel Sp und mit k die Exzentrizität des Drehpunktes M' bezeichnet. Die Spindel Sp ist dabei in einer dem Außendurchmesser des Stahlrohres SR angepaßten Halterung H gelagert, welche mit Hilfe von drei, um Winkel von 120° versetzt angeordneten und nachgiebig gelagerten Rollenpaaren Ro auf den Außenumfang des Stahlrohres SR aufgeschoben wird und dabei die Spindel Sp mit hinreichender Genauigkeit annähernd fluchtend auf die durch den Mittlepunkt M gehande Rohrachse ausrichtet. An dem in das Stahlrohr SR ragenden Ende der Spindel Sp sind zwei gleich lange und sich in radialer Richtung erstreckende Arme Ar1 und Ar2 befestigt, welche an ihren bezüglich des Drehpunktes M' diametral gegenüberliegenden Enden Abstandssensoren AS bzw. AS' tragen. Bei den Abstandssensoren AS und AS' handelt es sich beispielsweise um induktive Abstandssensoren, die robust und sicher sind und sich durch eine gute Genauigkeit auszeichnen. Die Länge der Arme Ar1 und Ar2 ist so bemessen, daß die Meßfläche der Abstandssensoren AS und AS' jeweils den gleichen Abstand 1 zum Drehpunkt M' aufweisen und daß zum Innenumfang des Stahlrohres SR vom Drehwinkel $\varphi$ (vgl. Figur 1) abhängige Abstände $\Delta x(\varphi)$ und $\Delta y(\varphi)$ verbleiben. Weist beispielsweise das Stahlrohr Sr einen Nenninnendurchmesser von 500 mm auf, so besitzt der entsprechende Normkreis Nk (vgl. Figur 1) einen Radius r = 250 mm und die Arme Ar1 und Ar2 werden auf 1 = 245 mm eingestellt, so daß bei einer maximalen Exzentrizität k = ± 3 mm ein ungestörtes Drehen der Spindel Sp gewährleistet ist. Aufgrund de
Zusammenhanges zwischen den Figuren 1 und 3 gilt

$$x(\varphi) = 1 + \Delta x(\varphi) \text{ und}$$
$$y(\varphi) = 1 + \Delta y(\varphi).$$

Das Sensorsignal SS und das zweite Signal SS' können also um den Abstand 1 korrigiert werden,
wobei die Signalverarbeitung dann gemäß Figur 2 erfolgt. Es können aber auch gemäß der Beziehung

$$x(\varphi) + y(\varphi) \cong 2\,(r-1) \pm \Delta r(\varphi)$$

die den Abständen $\Delta x$ und $\Delta y$ entsprechenden Signale addiert werden, wobei dann ein Gleichanteil G
abzuziehen ist, der dem Betrag $2(r-1)$ entspricht. In beiden Fällen erfolgt die Signalverarbeitung durch eine
Signalverarbeitungseinrichtung SE, die in Figur 4 durch einen mit der Spindel Sp drehbaren Block
angedeutet ist. Durch diese Anordnung kann die Signalübertragung von den Abstandssensoren AS und
AS' zur Signalverarbeitungseinrichtung SE ohne Schleifringe oder dgl. erfolgen. In diesem Fall ist es dann
auch zweckmäßig, in dem mit der Spindel Sp drehbaren Block auch zusätzlich noch eine Batterie für die
Spannungsversorgung der Signalverarbeitungseinrichtung SE unterzubringen.

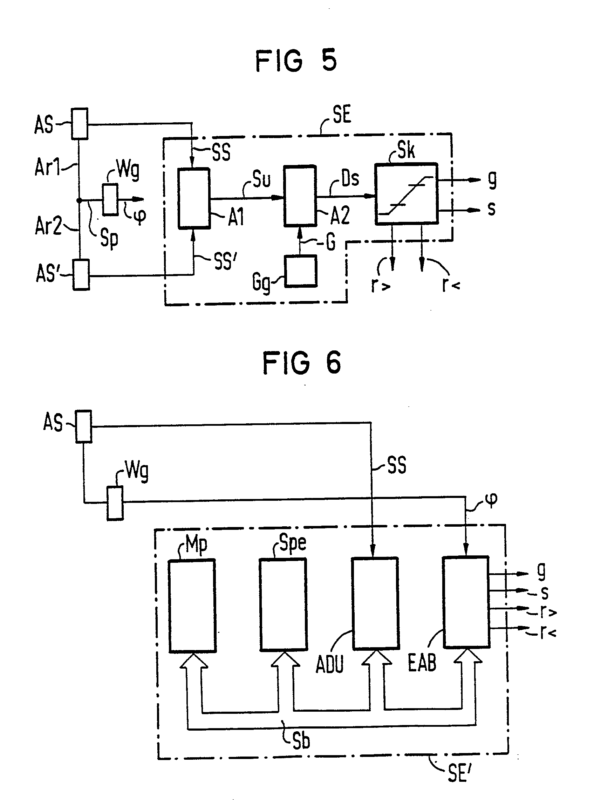

Figur 5 zeigt ein erstes Ausführungsbeispiel der insgesamt mit SE bezeichneten Signalverarbeitungseinrichtung. Wie zu erkennen ist, werden das Sensorsignal SS des Abstandssensors AS und das zweite
Signal SS' des zweiten Abstandssensors AS' einem Addierglied A1 zugeführt, welches das Summensignal
Su bildet. Von diesem Summensignal Su wird in einem zweiten Addierglied A2 der Gleichanteil G
abgezogen, wobei der Gleichanteil G mit negativen Vorzeichen in einem Gleichwertgeber Gg erzeugt wird.
Der Gleichwertgeber Gg erzeugt also ein Signal -G, welches dem Betrag 2r oder $2(r-1)$ entspricht, je nach
dem, ob in dem Sensorsignal SS und dem zweiten Signal SS' der Abstand 1 berücksichtigt ist oder nicht
(vgl. Figur 3). Das in dem zweiten Addierglied A2 gebildete Differenzsignal Ds wird dann einem
Schwellwertkomparator Sk zugeführt, welcher das dem in Figur 2 aufgezeigten Signalanteil Sa2
entsprechende Differenzsignal Ds auf Überschreiten oder Unterschreiten vorgebbarer Toleranzschwellen
überwacht. Überschreiten oder Unterschreiten die detektierten Kreisformabweichungen Kaz (vgl. Figur 1)
diese Toleranzschwellen nicht, so wird ein Gut-Signal g erzeugt, während im anderen Falle ein Schlecht-
Signal s erzeugt wird, welches anzeigt, daß das untersuchte Stahlrohr SR (vgl. Figuren 3 und 4) für ein
Verschweißen auf der Baustelle nicht geeignet ist. Der Schwellwertkomparator Sk erzeugt auch Signale
"r>" und "r<", welche angeben, ob es sich bei den detektierten Kreisformabweichungen Ka
beispielsweise um Ausbeulungen oder Einbeulungen handelt. Da sämtliche Auswertesignale in Echtzeit
vorliegen, kann mit einer Anzeige- oder Markiervorrichtung durch den Drehwinkel $\varphi$ der Ort angegeben
werden, bei dem die Fehler festgestellt wurden. Dies ist in Figur 5 jedoch nur durch einen von der Spindel
Sp angetriebenen Winkelschrittgeber Wg angedeutet, welcher ein dem jeweiligen Drehwinkel $\varphi$
entsprechendes Signal erzeugt.

Figur 6 zeigt ein zweites Ausführungsbeispiel einer hier mit SE' bezeichneten Signalverarbeitungseinrichtung. Diese Signalverarbeitungseinrichtung SE' besteht aus einem Mikroprozessor Mp, einem
Speicher Spe, einem Analog-Digital-Umsetzer ADU und einem Eingabe-Ausgabe-Baustein EAB, wobei
diese Funktionseinheiten durch einen Systembus Sb für die Übertragung von Steuerinformationen,
Adressen und Daten verknüpft sind. Für die Signalerzeigung ist nur der auf dem Arm A1 befestigte und um
die Spindel Sp drehbare Abstandssensor AS erforderlich, d.h. der in den Figuren 3 und 4 dargestellte Arm
A2 mit dem zweiten Abstandssensor AS' kann entfallen. Das von dem Abstandssensor AS erzeugte
Sensorsignal SS wird dem Analog-Digital-Umsetzer ADU zugeführt, während das von dem Winkelschrittgeber Wg entsprechend dem jeweiligen Drehwinkel der Spindel Sp erzeugte Signal $\varphi$ in Form
entsprechender Impulse dem Eingabe-Ausgabe-Baustein EAB zugeführt wird.

Das digitalisierte Sensorsignal SS wird in den Speicher Spe eingelesen, dessen Speicherplätze einer
360°-Teilung des Drehwinkels $\varphi$ der Spindel Sp zugeordnet sind. Ist beispielsweise für jeden Winkelgrad
ein Speicherplatz vorgesehen, so können die digitalisierten Sensorsignalwerte der Speicherplätze für 0°
und 180°, für 1° und 181°, für 2° und 182° usw. in dem Mikroprozessor Mp addiert werden, wobei dieser
Vorgang einer Addition des Sensorsignals SS und des zweiten Signals SS' (vgl. Figur 2) entspricht. Der
Mikroprozessor Mp übernimmt auch die Subtraktion des Gliechanteils G und die Schwellwertoperation des
in Figur 5 dargestellten Schwellwertkomparators Sk, so daß von dem Eingabe-Ausgabe-Baustein EAB die
bereits im Zusammenhang mit Figur 5 erläuterten Signale "g", "s", "r>" und "r<" ausgegeben werden
können. Diese Signale können dann auch ortsrichtig dem jeweiligen Drehwinkel $\varphi$ der Spindel Sp
zugeordnet werden.

Wie aus der vorausgegangenen Erläuterung der Figuren 1 bis 6 hervorgeht, kann mit der erfindungsgemäßen Vorrichtung eine Rundheitsprüfung von Stahlrohren und anderen rotationssymmetrischen
Teilen vorgenommen werden, welche das Auftreten und die Lage von unzulässigen Kreisformabweichungen anzeigt. Gemäß DIN 7182 ist die Abweichung vom Kreis der Durchmesserunterschied
zweier konzentrischer Kreise, zwischen denen die Umfangslinie liegt. Abweichend von dieser Definition
werden mit der erfindungsgemäßen Vorrichtung jedoch in erster Linie die positiven und negativen
Kreisformabweichungen für die jeweiligen Drehwinkel der Spindel getrennt ermittelt. Nach DIN 7182 kann die Unrundheit jedoch auch als Differenz zwischen der maximalen positiven Kreisformabweichung und der maximalen negativen Kreisforabweichung von einem Normkreis angegeben werden.

Die Ermittlung von Kreisformabweichungen hängt bei der erfindungsgemäßen Vorrichtung nicht von der Umdrehungsgeschwindigkeit sondern nur von der Umdrehung bzw. dem Drehwinkel der Spindel ab. Aus diesem Grund kann die Spindel auch manuell über eine Kurbel angetrieben werden, was insbesondere bei tragbaren Vorrichtungen für die Rundheitsprüfung von Stahlrohren von Vorteil ist. Durch eine mehrfache Messung während mehrerer Umdrehungen der Spindel bei gleichzeitiger Verdrehung der Halterung der Spindel relativ zum Prüfling kann eine eventuelle vorhandene Meßunsicherheit stark reduziert werden. Neben der geschilderten Abtastung des Innenumfangs eines Prüflings kann auch dessen Außenumfang abgetastet werden. Dazu sind lediglich der Abstandssensor oder die Abstandssensoren außen um den Prüfling herumzuführen, was beispielsweise durch eine im Prüfling bzw. Stahlrohr verspannbare Halterung und durch gekröpfte Arme der Spindel bewerkstelligt werden kann.

**Patentansprüche**

1. Vorrichtung zur Ermittlung der Kreisformabweichungen von rotationssymmetrischen Teilen, insbesondere von Stahlrohren, mit
einer annähernd fluchtend auf die Prüflingsachse einstellbaren Spindel (Sp) und
einer elektronischen Signalverarbeitungseinrichtung (SE; SE') zum Abtrennen eines auf zu detektierenden Kreisformabweichungen (Ka) beruhenden Signalanteiles (Sa2) des Sensorignales (SS) von dem Signalanteil (Sa1) des Sensorsignals (SS), der auf einer bezüglich der Prüflingsachse exzentrischen Einstellung der Spindel (Sp) beruht, gekennzeichnet durch einen um die Spindelachse drehbaren Abstandssensor zum radialen Abtasten einer Umfangsfläche eines Prüflings, wobei die Signalverarbeitungseinrichtung (SE, SE') so eingerichtet ist, daß im Betrieb das Sensorsignal (SS) und ein zweites Signal (SS') mit gleichem, aber um einen Drehwinkel ($\varphi$) der Spindel (Sp) von 180° phasenverschobenem Signalverlauf addiert wird.

2. Vorrichtung nach Anspruch 1, dadurch gekennzeichnet, daß in der Signalverarbeitungseinrichtung (SE; SE') von dem aus Sensorsignal (SS) und zweitem Signal (SS') gebildeten Summensignal (Su) ein Gleichanteil (G) abziehbar ist, wobei der Gleichanteil (G) dem Durchmesser (2r) eines dem Prüfling zugeordneten Normkreises (Nk) entspricht.

3. Vorrichtung nach einem der vorhergehenden Ansprüche, dadurch gekennzeichnet, daß der auf zu detektierenden Kreisformabweichungen (Ka) beruhende Signalanteil (Sa2) des Sensorsignals (SS) auf Überschreiten oder Unterschreiten vorgebbarer Toleranzschwellen überwachbar ist.

4. Vorrichtung nach einem der vorhergehenden Ansprüche, dadurch gekennzeichnet, daß der Spindel (Sp) ein Winkelschrittgeber (Wg) zugeordnet ist.

5. Vorrichtung nach Anspruch 1, dadurch gekennzeichnet, daß das zweite Signal (SS') durch einen zweiten um die Spindelachse (Sp) drehbaren Abstandssensor (AS') erzeugbar ist, wobei der Abstandssensor (AS) und der zweite Abstandsensor (AS') bezüglich der Spindelachse einander diametral gegenüberliegend angeordnet sind.

6. Vorrichtung nach Anspruch 5, dadurch gekennzeichnet, daß das Sensorsignal (SS) und das zweite Signal (SS') einem Addierglied (A1) der Signalverarbeitungseinrichtung (SE) zuführbar sind.

7. Vorrichtung nach den Ansprüchen 2 und 6, dadurch gekennzeichnet, daß das in dem Addierglied (A1) gebildete Summensignal (Su) und ein dem negativen Gleichanteil (G) entsprechendes Signal einem zweiten Addierglied (A2) zuführbar sind.

8. Vorrichtung nach den Ansprüchen 3 und 7, dadurch gekennzeichnet, daß das in dem zweiten Addierglied (A2) gebildete Differenzsignal (Ds) einem Schwellwertkomparator (Sk) zuführbar ist.

9. Vorrichtung nach einem der Ansprüche 1 bis 4, dadurch gekennzeichnet, daß das Sensorsignal (SS) einem Speicher (Spe) der Signalverarbeitungseinrichtung (SE') zuführbar ist, dessen Speicherplätze einer 360°-Teilung des Drehwinkels ($\varphi$) der Spindel (Sp) zugeordnet sind.

10. Vorrichtung nach Anspruch 9, dadurch gekennzeichnet, daß das Sensorsignal (SS) über einen Analog-Digital-Umsetzer (ADU) dem Speicher (Spe) zuführbar ist.

11. Vorrichtung nach Anspruch 10, dadurch gekennzeichnet, daß die digitalen Sensorsignalwerte von jeweils zwei, 180° versetzten Drehwinkeln ($\varphi$) zugeordneten Speicherplätzen des Speichers (Spe) mit Hilfe eines Mikroprocessors (Mp) addierbar sind.

12. Vorrichtung nach Anspruch 11, dadurch gekennzeichnet, daß das Überschreiten oder Unterschreiten vorgebbarer Toleranzschwellen durch den Mikroprocessor (Mp) überwachbar ist.

13. Vorrichtung nach einem der vorhergehenden Ansprüche, dadurch gekennzeichnet, daß die Signalverarbeitungseinrichtung (SE) mit der Spindel (Sp) drehbar angeordnet ist.

14. Vorrichtung nach Anspruch 13, dadurch gekennzeichnet, daß für die Spannungsversorgung der Signalverarbeitungseinrichtung (SE) eine mit der Spindel (Sp) drehbare Batterie vorgesehen ist.

15. Vorrichtung nach einem der vorhergehenden Ansprüche, dadurch gekennzeichnet, daß die Spindel (Sp) in einer auf den Prüfling aufschiebbaren Halterung (H) gelagert ist.

**Revendications**

1. Dispositif pour déterminer des écarts de forme de pièces à symétrie de révolution, notamment de tubes d'acier, par rapport à la forme circulaire, comprenant

une broche (Sp) réglable en étant approximativement alignée sur l'axe de l'objet à tester, et

un dispositif électronique (SE; SE') de traitement de signaux, qui sert à séparer une composante (Sa2), basée sur des écarts devant être détectés (Ke) par rapport à la forme circulaire, du signal (SS) du capteur, d'une composante (Sa1) du signal (SS) du capteur, basée sur un réglage de la broche (Sp), excentrée par rapport à l'axe de l'objet à tester, caractérisé par

un capteur de distance, qui peut tourner autour de l'axe de la broche et qui sert à explorer radialement une surface circonférentielle d'un objet à tester, le disipositif (SE, SE') de traitement des signaux étant orienté de telle sorte qu'en fonctionnement, le signal (SS) du capteur et un second signal (SS') possédant la même variation, mais déphasé d'un angle de rotation (φ) de la broche (Sp) égal à 180°, sont additionnés.

2. Dispositif suivant la revendication 1, caractérise par le fait que dans le dispositif (SE; SE') de traitement des signaux, on peut retirer und composante continue (G) du signal somme (Si) formé par le signal (SS) du capteur et par le second signal (SS'), la composante continue (G) correspondant au diamètre (2r) d'un cercle normalisé (Nk) associé à l'objet à tester.

3. Dispositif suivant l'une des revendications précédentes, caractérise par le fait que l'on vérifie si la composante (Sa2), basée sur des écarts devant être détectés (Ka) par rapport à la forme circulaire, du signal (SS) se situe au-dessus ou au-dessous de seuils de tolérance pouvant être prédéterminés.

4. Dispositif suivant l'une des revendications précédentes, caractérise par le fait qu'un capteur de pas angulaires (Wg) est associé à la broche (Sp).

5. Dispositif suivant la revendication 1, caractérise par le fait que le second signal (SS') peut être produit par un second capteur de distance (AS'), qui peut tourner autour de l'axe (Sp) de la broche, le capteur de distance (AS) et le second capteur de distance (AS') étant diamétralement opposés par rapport à l'axe de la broche.

6. Dispositif suivant la revendication 5, caractérise par le fait que le signal (SS) du capteur et le second signal (SS') peuvent être envoyés à un circuit additionneur (A1) du dispositif de traitement de signaux (SS).

7. Dispositif suivant les revendications 2 et 6, caractérise par le fait que le signal somme (Su) formé dans le circuit additionneur (A1) et un signal correspondant à la composante continue négative (G) peuvent être envoyés à un second circuit additionneur (A2).

8. Dispositif suivant les revendications 3 et 7, caractérise par le fait que le signal de différence (Ds) formé dans le second circuit additionneur (A2) peut être envoyé à un comparateur à valeur de seuil (Sk).

9. Dispositif suivant l'une des revendications 1 à 4, caractérise par le fait que le signal (SS) du capteur peut être envoyé à une mémoire (Spe) du dispositif (SE') de traitement des signaux, dont les emplacements de mémoire sont associés à une subdivision sur 360° de l'angle de rotation (φ) de la broche (Sp).

10. Dispositif suivant la revendication 9, caractérise par le fait que le signal (SS) du capteur peut être envoyé à la mémoire (Spe) par l'intermédiaire d'un convertisseur analogique/numérique (ADU).

11. Dispositif suivant la revendication 10, caractérise par le fait que les valeurs numériques du signal du capteur d'emplacements de la mémoire (Spe), associées respectivement à deux angles de rotation (j) décalés de 180°, peuvent être additionnées à l'aide d'un microprocesseur (Mp).

12. Dispositif suivant la revendication 11, caractérise par le fait que le dépassement, par le haut ou par le bas, de seuils de tolérance pouvant être prédéterminés peut être contrôle par le microprocesseur (Mp).

13. Dispositif suivant l'une des revendications précédentes, caractérise par le fait que le dispositif (SE) de traitement des signaux est monté de manière à pouvoir tourner avec la broche (Sp).

14. Dispositif suivant la revendication 13, caractérise par le fait que pour l'alimentation en tension du dispositif (SE) de traitement des signaux, il est prévu une pile pouvant tourner avec la broche (Sp).

15. Dispositif suivant l'une des revendications précédentes, caractérise par le fait que la broche (Sp) est tourillonnée dans un support (H) pouvant être emmanché sur l'objet à traiter.

**Claims**

1. Apparatus for determining deviations from a circular form in rotationally symmetrical parts, preferably in steel pipes, said apparatus having a spindle (Sp), which can be set in approximate alignment with the axis of a test specimen, and having an electronic signal processing device (SE; SE') for separating a signal component (Sa2) of the sensor signal (SS), which component is based on deviations (Ka) to be detected from a circular form, from the signal component (Sa1) of the sensor signal (SS), which component is based on an eccentric setting of the spindle (Sp) with respect to the axis of the test specimen, characterized by an interval sensor, rotatable around the spindle axis, for radially sensing a circumferential surface of a test specimen, the signal processing device (SE, SE') being set up so that in operation the sensor signal (SS) and a second signal (SS') having the same signal curve but phase-shifted by an angle of rotation (φ) of the spindle (Sp) of 180° are added.

2. Apparatus according to Claim 1, characterized in that, in the signal processing device (SE; SE') a constant component (G) is subtractable from the sum signal (Su) formed from the sensor signal (SS) and

7

the second signal (SS'), the constant component (G) corresponding to the diameter (2r) of a standardized circle (Nk) allocated to the test specimen.

3. Apparatus according to one of the preceding claims, characterized in that the signal component (Sa2) of the sensor signal (SS), which component is based on deviations (Ka) to be detected from a circular form, and can be monitored for overshooting or undershooting of prescribable tolerance thresholds.

4. Apparatus according to one of the preceding claims, characterized in that an angle encoder (Wg) is allocated to the spindle (Sp).

5. Apparatus according to Claim 1, characterized in that the second signal (SS') can be generated by a second interval sensor (AS') rotatable around the spindle axis (Sp), the interval sensor (AS) and the second interval sensor (AS') being arranged diametrically opposite one another with respect to the spindle axis.

6. Apparatus according to Claim 5, characterized in that the sensor signal (SS) and the second signal (SS') can be fed to an adder element (A1) of the signal processing device (SE).

7. Apparatus according to Claims 2 and 6, characterized in that the sum signal (Su) formed in the adder element (A1) and a signal corresponding to the negative constant component (G) can be fed to a second adder element (A2).

8. Apparatus according to Claims 3 and 7, characterized in that the difference signal (Ds) formed in the second adder element (A2) can be fed to a threshold comparator (Sk).

9. Apparatus according to one of Claims 1 to 4, characterized in that the sensor signal (SS) can be fed to a memory (Spe) of the signal processing device (SE'), the memory locations of which are allocated to a 360° division of the angle of rotation ($\varphi$) of the spindle (Sp).

10. Apparatus according to Claim 9, characterized in that the sensor signal (SS) can be fed via an analog-to-digital converter (ADU) to the memory (Spe).

11. Apparatus according to Claim 10, characterized in that the digital sensor signal values of memory locations of the memory (Spe), which locations are allocated in each case to two angles or rotation ($\varphi$) offset by 180°, can be added with the aid of a microprocessor (Mp).

12. Apparatus according to Claim 11, characterized in that overshooting or undershooting of prescribable tolerance thresholds can be monitored by the microprocessor (Mp).

13. Apparatus according to one of the preceding claims, characterized in that the signal processing device (SE) is arranged rotatably with the spindle (Sp).

14. Apparatus according to Claim 13, characterized in that a battery rotatable with the spindle (Sp) is provided for the voltage supply of the signal processing device (SE).

15. Apparatus according to one of the preceding claims, characterized in that the spindle (Sp) is seated in a mount (H) that can be slipped onto the test specimen.

## FIG 1

## FIG 2

FIG 3

FIG 4

EP 0 169 368 B1

## FIG 5

## FIG 6